# EUROPÄISCHE PATENTSCHRIFT

(11) **EP 2 808 587 B1**
(45) Veröffentlichungstag und Bekanntmachung des Hinweises auf die Patenterteilung: **27.02.2019**
(21) Anmeldenummer: 14001662.7
(22) Anmeldetag: 12.05.2014
(51) Int. Cl.: F16K 31/04, F16K 37/00

(54) **Stellantrieb und Verfahren zum Betreiben eines Stellantriebs**
Actuator and method of operating an actuator
Mécanisme de commande et procédé de fonctionnement d'un mécanisme de commande

(30) Priorität: 13.05.2013 DE 102013008035
(43) Veröffentlichungstag der Anmeldung: 03.12.2014
(73) Patentinhaber: SIPOS Aktorik GmbH, 90518 Altdorf (DE)
(72) Erfinder: Müller, Peter, 91126 Schwabach (DE); Raithel, Ulrich, 91052 Erlangen (DE)
(74) Vertreter: Börjes-Pestalozza, Henrich

(56) Entgegenhaltungen:
- WO-A1-2009/050442
- CN-U- 201 764 067
- DE-A1- 10 351 105
- DE-A1-102006 044 724
- DE-A1-102008 058 364
- US-A1- 2007 057 928
- US-A1- 2010 204 726

## Beschreibung

Die Erfindung betrifft einen Stellantrieb, insbesondere elektrischer Stellantrieb, mit wenigstens einem Bedienelement und einer Anzeigeeinheit, welche zur Anzeige von Bedien- und Statusrückmeldungen eingerichtet ist.

Stellantriebe werden beispielsweise zur Betätigung von Ventilen in Anlagen eingesetzt. Oft ist erforderlich, Einstellungen am Stellantrieb vor Ort vorzunehmen und/oder den Stellantrieb vor Ort - also nicht über eine Leitwarte - zu betätigen. Hierzu ist es wünschenswert, möglichst viele Bedienfunktionen, die von einer Leitwarte aus ansteuerbar sind, auch für eine manuelle Ansteuerung vor Ort bereitzustellen.

Die Erfindung betrifft daher weiter ein Verfahren zum Betreiben eines Stellantriebs, wobei ein mit dem Stellantrieb erreichbarer Stellweg in einer Anzeigemaske an einer farbfähigen Anzeigeeinheit dargestellt wird, wobei eine momentane Stellposition des Stellantriebs an dem dargestellten Stellweg markiert wird.

Aus US2010/0204726 A1 sind eine Vorrichtung und ein Verfahren zum Schätzen einer Leckage in einem chirurgischen Tourniquet-System bekannt, wobei eine Tourniquet-Manschette pneumatisch mit einem Instrument verbunden ist und in dem Instrument ein Druckerhöhungsventil als ein elektrisch betriebenes normal geschlossenes pneumatisches Ventil ausgebildet ist.

Aus WO2009/050442 A1 ist eine Ventiltestung bekannt, bei welcher eine Kraft auf einen Ventilschaft eingebracht wird und die resultierende Bewegung des Ventils detektiert wird. Aus DE 10 2006 044 724 A1 ist eine Vorrichtung zum Bedienen eines Feldgeräts bekannt, wobei das Feldgerät in der Automations- und Prozesssteuertechnik eingesetzt wird, um eine Prozessvariable wie z. B. Durchfluss, Füllstand, Druck und Temperatur oder eine andersartige physikalische und/oder chemische Prozessgröße in einem Prozessablauf zu ermitteln. Die CN 201 764 067 U betrifft einen elektrischen Stellantrieb für Ventile mit wenigstens einem Bedienelement und einer als LC-Display ausgebildeten Anzeigeeinheit, und mit einem Motor, mit welchem eine Abtriebswelle, die mit einem Ventil verbunden ist, antreibbar ist.

Der Erfindung liegt die Aufgabe zugrunde, einen Stellantrieb mit verbesserten Gebrauchseigenschaften zu schaffen.

Zur Lösung dieser Aufgabe bei einem Stellantrieb sind erfindungsgemäß die Merkmale von Anspruch 1 vorgesehen. Insbesondere wird somit erfindungsgemäß bei einem Stellantrieb der eingangs beschriebenen Art vorgeschlagen, dass die Anzeigeeinheit als Display mit einer aktiven, farbfähigen Matrix ausgebildet ist. Durch den Einsatz eines farbfähigen Displays sind mit einem erfindungsgemäßen Stellantrieb Rückmeldungen auf Bedienkommandos und/oder Zustandsmeldungen mit einer höheren Informationsdichte ausgebbar. Die Maximalgröße einer erforderlichen Anzeigeeinheit ist somit reduzierbar. Von Vorteil ist weiter, dass durch die Farbfähigkeit ein größerer Gestaltungsspielraum bereitstellbar ist. Somit sind ergonomisch günstigere und/oder intuitiv erfassbare Ausgabeformen schaffbar. Die Farbfähigkeit der Anzeigeeinheit hat insgesamt den Vorteil, dass die einzelnen Anzeigeelemente oder -symbole deutlicher voneinander trennbar sind, als das bei den bisher üblichen monochromen Anzeigeeinheiten der Fall ist.

Es sind unterschiedliche Technologien mit Vorteil verwendbar, um eine farbfähige aktive Matrix bereitzustellen.

Bei einer Ausgestaltung der Erfindung kann vorgesehen sein, dass das Display als TFT-Display ausgebildet ist. Es hat sich herausgestellt, dass die TFT-Technologie, bei welcher Dünnschichttransistoren eingesetzt werden, besonders stabil gegen die rauen Umgebungsbedingungen ist, in denen Stellantriebe eingesetzt werden. Die Verwendung einer aktiven Matrix hat den Vorteil, dass die Anzeigeeinheit auch bei tieferen Temperaturen, insbesondere bei Temperaturen unter 0°C oder weit unter 0°C, beispielsweise unter -10°C, genügend schnell mit brauchbaren Ansprechzeiten auf Bedienungen anspricht.

Erfindungsgemäss ist vorgesehen, dass eine Ansteuerungseinheit an die Anzeigeeinheit angeschlossen ist, mit welcher wenigstens zwei voneinander verschiedene Anzeigemasken an der Anzeigeeinheit darstellbar sind. Somit kann zwischen unterschiedlichen Anzeigearten gewechselt werden, beispielsweise zwischen einem zentralen Betrieb und einem manuellen Betrieb vor Ort.

Erfindungsgemäss ist auch vorgesehen, dass eine Stellposition einer Abtriebswelle des Stellantriebs und/oder eines angeschlossenen Ventils an der Anzeigeeinheit grafisch darstellbar ist. Von Vorteil ist dabei, dass eine unmittelbare Sichtkontrolle beim manuellen Verfahren des angeschlossenen Ventils ausführbar ist.

Bei einer Ausgestaltung der Erfindung kann vorgesehen sein, dass wenigstens eine Endlage eines von dem Stellantrieb bereitgestellten Stellwegs anzeigbar ist. Bevorzugt sind beide Endlagen - beispielsweise eine geschlossene und eine vollständig geöffnete Stellung eines Ventils - eines Stellwegs anzeigbar. Von Vorteil ist dabei, dass dem Benutzer anzeigbar ist, ob eine gewünschte Endlage am Ventil tatsächlich erreicht wurde.

Bei einer Ausgestaltung der Erfindung kann vorgesehen sein, dass eine, beispielsweise die bereits erwähnte, Ansteuerungseinheit zur Anzeige einer Endlage mittels eines Endlagesymbols in Abhängigkeit davon, ob an der Endlage eine drehmomentbezogene oder eine positionsbezogene Endlagenabschaltung definiert ist, eingerichtet ist. Besonders günstig ist es, wenn die Endlagensymbole grafisch darstellen, ob das Ventil in dieser Lage geöffnet oder geschlossen ist.

Bei einer Ausgestaltung der Erfindung kann vorgesehen sein, dass eine, beispielsweise die bereits erwähnte, Ansteuerungseinheit zum Empfang eines Bestätigungssignals, welches ein Erreichen einer Endlage signalisiert, eingerichtet ist. Von Vorteil ist dabei, dass die Ansteuerungseinheit die Darstellung grafisch verändern kann, wenn das Bestätigungssignal empfangen wurde. Somit kann dem Benutzer die Rückmeldung gegeben werden, dass die gewünschte Endlage tatsächlich erreicht wurde. Hierdurch erhöht sich der Bedienkomfort nochmals.

Es kann somit vorgesehen sein, dass eine, beispielsweise die bereits erwähnte, Ansteuerungseinheit zur Veränderung eines angezeigten Endlagensymbols in Abhängigkeit von einem, beispielsweise dem erwähnten, Bestätigungssignal eingerichtet ist. Der Benutzer ist somit nicht mehr darauf angewiesen, das Erreichen einer Endlage anhand einer grafisch angezeigten Position auf einem Stellweg zu schätzen. Vielmehr ist eine binäre Information bereitstellbar, die das Erreichen der Endlage rückmeldet. Die Veränderung des Endlagensymbols als Rückmeldung ist intuitiv gut erfassbar.

Bei einer Ausgestaltung der Erfindung kann vorgesehen sein, dass das Bedienelement um eine Achse dreh- und/oder schwenkbar ausgebildet ist. Auf diese Weise kann eine einfache Menüführung an der Anzeigeeinheit realisiert werden, bei welcher eine Listendarstellung mit Listeneinträgen einer Liste anzeigbar ist und angezeigt wird. Durch Drehen und/oder Schwenken des Bedienelements kann zwischen den Listeneinträgen in einer intuitiv leicht erfassbaren Weise gewechselt werden.

Bei einer Ausgestaltung der Erfindung kann vorgesehen sein, dass das Bedienelement anschlagfrei drehbar ausgebildet ist. Durch den Verzicht auf einen Anschlag für die Drehbewegung ist erreichbar, dass die Funktionsbelegung des Bedienelements unabhängig von der Orientierung einer Aufstellung des Stellantriebs im Raum definierbar ist. Denn ohne einen Anschlag für die Drehbewegung ist eine Funktionsbelegung des Bedienelements vorgebbar, die nur Rechtsdrehungen und Linksdrehungen voneinander unterscheidet. Diese Unterscheidung ist unabhängig von der Orientierung des Stellantriebs im Raum.

Bei einer Ausgestaltung der Erfindung kann vorgesehen sein, dass das Bedienelement verschiebbar, vorzugsweise entlang der oder einer Achse verschiebbar, ausgebildet ist. Von Vorteil ist dabei, dass angewählte Listeneinträge bestätigbar oder aktivierbar sind. Somit wird ein weiterer Bewegungsfreiheitsgrad am Bedienelement bereitgestellt, der komplexere Bedienfunktionen ermöglicht.

Bei einer Ausgestaltung der Erfindung kann vorgesehen sein, dass eine an der Anzeigeeinheit darstellbare Anzeigemaske in wenigstens zwei Teilbereiche unterteilt ist, die mit dem wenigstens einen Bedienelement einzeln anwählbar sind. Bevorzugt sind mehr als zwei Teilbereiche ausgebildet. Durch die Unterteilung ergibt sich eine Segmentierung der Anzeigemaske. Von Vorteil ist dabei, dass die mit den Teilbereichen jeweils verknüpfte Bedienfunktion grafisch darstellbar ist. Schriftliche Erläuterungen sind somit verzichtbar. Besonders günstig ist es dabei, wenn das Bedienelement drehbar angeordnet ist. Durch Drehen des Bedienelements kann somit zwischen den Teilbereichen gesprungen werden.

Erfindungsgemäss ist vorgesehen, dass die Ansteuerungseinheit zur Darstellung wenigstens einer Anzeigemaske in wenigstens zwei, vorzugsweise in vier oder mehr als vier, Orientierungen an der Anzeigeeinheit eingerichtet ist. Von Vorteil ist dabei, dass die Anzeigemaske an der Anzeigeeinheit gedreht werden kann, bis die Anzeigemaske für den Betrachter in der richtigen Orientierung dargestellt ist. Die Ablesbarkeit der Anzeigeeinheit bleibt somit in wenigstens zwei, insbesondere in allen vier Orientierungen der Aufstellung des Stellantriebs erhalten. Eine Bewegung der Anzeigeeinheit am Stellantrieb ist hierbei nicht erforderlich. Die Anzeigeeinheit ist somit fest am Stellantrieb ausbildbar, wodurch die Standzeit in rauen Umgebungsbedingungen erhöht werden kann.

Erfindungsgemäss ist vorgesehen, dass eine Orientierung einer Darstellung einer Anzeigemaske an der Anzeigeeinheit mit dem wenigstens einen Bedienelement veränderbar ist. Von Vorteil ist dabei, dass die Orientierung der Darstellung an die Orientierung der Aufstellung des Stellantriebs manuell anpassbar ist. Die manuelle Einstellung der Orientierung ist besonders günstig unter den rauen Einsatzbedingungen für Stellantriebe. Denn bei einer automatischen Einstellung mittels Gravitationssensor oder dergleichen besteht die Gefahr von Fehleinstellungen, die beispielsweise durch Vibrationen ausgelöst werden.

Bei einer Ausgestaltung der Erfindung kann vorgesehen sein, dass der Stellantrieb durch Anwahl und Aktivierung wenigstens eines Teilbereichs einer oder der Anzeigemaske, vorzugsweise mittels des wenigstens einen Bedienelements, verfahrbar ist. Von Vorteil ist dabei, dass eine einfache Bedienung im manuellen Betrieb ermöglicht ist.

Bei einer Ausgestaltung der Erfindung kann vorgesehen sein, dass der Stellantrieb durch Anwahl und Aktivierung wenigstens eines Teilbereichs einer oder der Anzeigemaske gegen eine weitere Bedienung sperrbar ist. Von Vorteil ist dabei, dass der Stellantrieb auf einfache Weise gegen eine unbefugte und/oder unbeabsichtigte Bedienung sperrbar ist.

Zur Lösung der genannten Aufgabe wird erfindungsgemäß bei einem Verfahren zum Betreiben eines Stellantriebs der eingangs beschriebenen Art vorgeschlagen, dass ein einer Verstellbewegung des Stellantriebs zugeordneter Teilbereich der Anzeigemaske mit einem Bedienelement angewählt wird und dass der Teilbereich aktiviert wird und dass der Stellantrieb nach dem Aktivieren die Verstellbewegung ausführt. Von Vorteil ist dabei, dass eine manuelle, symbolgeführte Bedienung ermöglicht ist.

Bei einer Ausgestaltung der Erfindung kann vorgesehen sein, dass zum Anwählen des Teilbereichs das Bedienelement um eine Achse gedreht wird. Von Vorteil ist dabei, dass ein Durchlaufen der einzelnen Teilbereiche nacheinander in zwei Richtungen, den zwei Drehsinnen der Drehbewegung, ermöglicht ist. Dies verbessert die Bedienbarkeit des Stellantriebs.

Bei einer Ausgestaltung der Erfindung kann vorgesehen sein, dass zum Aktivieren des Teilbereichs das Bedienelement, vorzugsweise entlang einer, beispielsweise der bereits erwähnten, Achse, verschoben wird. Somit ist eine intuitiv erfassbare manuelle Betätigung durchführbar.

Bei einer Ausgestaltung der Erfindung kann vorgesehen sein, dass ein Endlagensymbol angezeigt oder verändert wird, wenn eine Endlage der Verstellbewegung erreicht ist. Somit ist eine unmittelbare Rückmeldung über die Erreichung einer Endlage gebbar.

Bei einer Ausgestaltung der Erfindung kann vorgesehen sein, dass ein, beispielsweise das bereits erwähnte, Endlagensymbol in Abhängigkeit davon, ob die zugehörige Endlage drehmomentbezogen oder positionsbezogen definiert ist, angezeigt wird. Von Vorteil ist dabei, dass zwei unterschiedliche Arten der Definition einer Endlage grafisch unterscheidbar darstellbar sind. Bevorzugt wird das zugehörige Endlagensymbol automatisch gewählt, sobald die jeweilige Endlage durch Parametrierung oder auf andere Weise definiert ist.

Bei einer Ausgestaltung der Erfindung kann vorgesehen sein, dass sich das Endlagensymbol für eine drehmomentbezogene Endlagenabschaltung von dem Endlagensymbol für eine positionsbezogene Endlagenabschaltung zumindest bereichsweise in Formgebung und in Farbgebung unterscheidet. Somit sind die Vorteile einer farbfähigen Matrix nutzbar. Das Endlagensymbol ist aufgrund seiner Farbgebung auch aus Entfernungen ablesbar, in welchen die Formunterschiede zwischen den Endlagensymbolen nicht mehr leicht erkennbar sind. Das Endlagensymbol ist aber auch durch Benutzer, die eine Farbsehschwäche haben, und unter ungünstigen Beleuchtungsverhältnissen ablesbar. Somit ist eine Redundanz in der Anzeige einer wichtigen Steuerinformation geschaffen, die Lesefehler vermindert.

Bei einer Ausgestaltung der Erfindung kann vorgesehen sein, dass die Ausführung der Verstellbewegung an der Anzeigeeinheit angezeigt wird. Dies kann durch ein blinkendes Symbol erfolgen. Von Vorteil ist dabei, dass der Benutzer die Möglichkeit einer Sichtkontrolle der manuellen Betätigung durchführen kann.

Die Erfindung wird nun anhand eines Ausführungsbeispiels näher erläutert, ist jedoch nicht auf dieses Ausführungsbeispiel beschränkt. Weitere Ausführungsbeispiele ergeben sich durch Kombination der Merkmale einzelner oder mehrerer Ansprüche untereinander und/der mit einzelnen oder mehreren Merkmalen des Ausführungsbeispiels.

Es zeigt:
- Fig. 1: einen erfindungsgemäßen Stellantrieb in einer Frontansicht,
- Fig. 2: eine Anzeigemaske in einer ersten Orientierung der Anzeigeeinheit des Stellantriebs aus Fig. 1,
- Fig. 3: die Anzeigemaske aus Fig. 2 in einer zweiten Orientierung der Anzeigeeinheit des Stellantriebs aus Fig. 1 und
- Fig. 4: eine weitere Anzeigemaske des Stellantriebs aus Fig. 1.

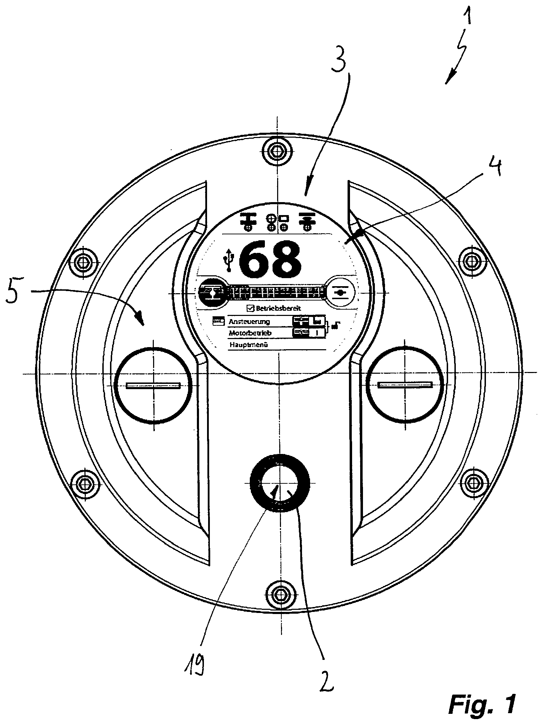

Fig. 1 zeigt einen im Ganzen mit 1 bezeichneten erfindungsgemäßen Stellantrieb in einer Ansicht von vorn.

Der Stellantrieb 1 hat einen an sich bekannten, hier nicht weiter dargestellten Motor, mit welchem eine ebenfalls nicht weiter dargestellte Abtriebswelle antreibbar ist. An die Abtriebswelle ist ein nicht weiter dargestelltes und an sich bekanntes Ventil anschließbar.

Der Stellantrieb 1 hat ein Bedienelement 2, mit welcher der Stellantrieb 1 manuell ansteuerbar ist.

Eine Anzeigeeinheit 3 ist zur Anzeige von Rückmeldungen des Stellantriebs 1 eingerichtet.

Die Anzeigeeinheit 3 ist als TFT-Display mit einer aktiven, farbfähigen Matrix 4 ausgebildet.

An die Anzeigeeinheit 3 ist im Stellantrieb 1 eine Ansteuerungseinheit 5 angeschlossen.

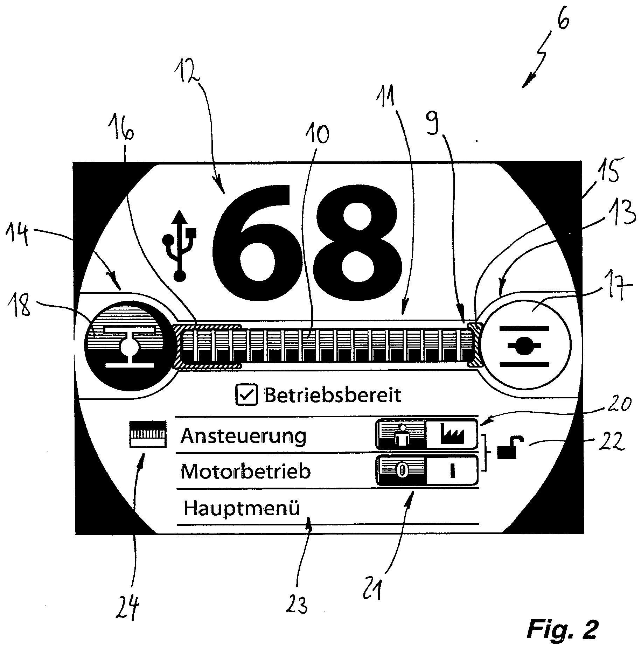

Die Ansteuerungseinheit 5 ist in an sich von Displays bekannter Weise zur Darstellung von verschiedenen Anzeigemasken 6, 7, 8 (vgl. Fig. 2 bis 4) eingerichtet.

An der Anzeigemaske 6 in Fig. 2 ist eine Stellposition 9 einer Abtriebswelle des Stellantriebs 1 oder eines an diese Abtriebswelle angeschossenen Ventils dargestellt. Die Stellposition 9 wird hierbei durch Anfärbung der Segmente 10, aus denen der Stellweg 11 zusammengesetzt ist, dargestellt.

Somit ergibt sich der Stellweg 11 als Balken in der Anzeigemaske 6. In Fig. 2 ist die aktuelle Stellposition 9 am rechten Ende des Stellwegs 11.

Zusätzlich wird die aktuelle Stellposition 9 in einem Zahlenfeld 12 numerisch dargestellt.

Durch Endlagensymbole 13, 14 sind die Endlagen des Stellwegs 11 anzeigbar.

Die Endlagensymbole 13, 14 symbolisieren die Abschaltbedingungen und sind jeweils aus einem Symbol 15, 16 zur Anzeige der Endlagenbereiche und einem anwählbaren Teilbereich 17, 18 zusammengesetzt.

Der Teilbereich 17 bezeichnet grafisch das vollständig geöffnete Ventil, der Teilbereich 18 das vollständig geschlossene.

Die Endlagenbereiche des Ventils sind positionsbezogen definiert und werden durch die Symbole 15, 16 visualisiert.

Die Endlage in der vollständig geschlossenen Position des Ventils ist dadurch definiert, dass ein vorgegebenes Drehmoment am Ventil eingestellt wurde. Die Abschaltbedingung ist somit drehmomentbezogen definiert.

Das Endlagensymbol 13, 14 ist somit in Abhängigkeit davon darstellbar, ob an der jeweiligen Endlage eine drehmomentbezogene oder eine positionsbezogene Endlageabschaltung definiert ist.

So sind die Endlagensymbole 13, 14 in Fig. 2 einer drehmomentbezogenen Abschaltung zugeordnet. Die Abschaltbedingung gibt somit ein Drehmoment an der Abtriebswelle oder am Ventil vor, bei dessen Erreichung der Stellantrieb abschaltet. Die Abschaltbedingung ist an den seitlich geöffneten Umrandungen der Teilbereiche 17, 18 erkennbar. Zusätzlich sind die Endlagenbereiche 15, 16 orange angezeigt.

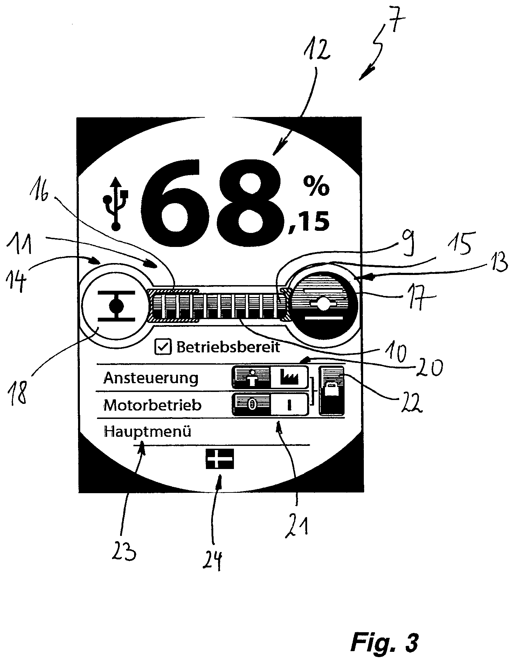

Die Endlagensymbole 13, 14 in Fig. 3 sind dagegen positionsbezogen definiert. Die Abschaltbedingung gibt somit eine Position der Abtriebswelle oder des Ventils vor, bei dessen Erreichung der Stellantrieb abschaltet. Die Abschaltbedingung ist an den im Wesentlichen kreisförmigen Umrandungen der Teilbereiche 17, 18 erkennbar, die seitlich geschlossen sind. Zusätzlich sind die Endlagenbereiche 15, 16 blau angezeigt.

Die Endlagensymbole 13, 14 in Fig. 2 unterscheiden sich somit von den Endlagensymbolen 13, 14 in Fig. 3 zumindest bereichsweise durch Farbe und Formgebung.

Sobald die Endlage erreicht ist, wird ein Bestätigungssignal erzeugt und an die Ansteuerungseinheit 5 gesendet. Nach Empfang des Bestätigungssignals ändert die Ansteuerungseinheit 5 die Darstellung des Endlagensymbols 13 bzw. 14. Im Beispiel wird das Endlagensymbol 13 mit invertierter Farbgebung angezeigt. Somit kann der Benutzer erkennen, dass die Endlage des Endlagensymbols 13 erreicht ist.

Das Bedienelement 2 ist am Stellantrieb 1 um eine Achse 19 anschlagfrei drehbar.

Zusätzlich ist das Bedienelement 2 entlang der Achse 19 verschiebbar angeordnet.

Das Bedienelement 19 weist somit zwei Bedienfreiheitsgrade auf: Rotation um die Achse 19 und Translation entlang der Achse 19.

Durch Drehen des Bedienelements 2 um die Achse 19 können die Teilbereiche 17, 18 sowie weitere Teilbereiche 20, 21, 22, 23, 24 angewählt werden.

Durch Drücken des Bedienelements 2, also durch Verschieben längs der Achse 19, wird der angewählte Teilbereich 17, 18, 20, 21, 22, 23, 24 aktiviert.

Hierbei steht der Teilbereich 20 für eine Umschaltung zwischen einem manuellen Betrieb vor Ort (links) und einem zentral Betrieb in der Leitwarte (rechts). Nach Anwählen des Teilbereichs 20 kann zwischen diesen Betriebsarten gewechselt werden, indem das Bedienelement 2 gedrückt wird.

Der Teilbereich 21 ermöglicht in analoger Weise das Abschalten des Motorbetriebs des Stellantriebs 1.

Der Teilbereich 22 ermöglicht es, den Stellantrieb 1 gegen eine weitere Bedienung zu sperren. Hierbei kann die Sperre so eingerichtet sein, dass sie nur von einer Zentrale oder direkt vor Ort aufhebbar ist.

Der Teilbereich 23 ermöglicht das Wechseln in ein Hauptmenü.

Der Teilbereich 24 ermöglicht es, die Sprache zu wechseln. Nach Anwahl und Aktivierung des Teilbereichs 24 öffnet sich eine Listendarstellung mit verfügbaren Sprachen, die wieder mit dem Bedienelement 2 anwählbar und einzeln aktivierbar sind.

Fig. 2 zeigt die Anzeigemaske 6 bei Aufstellung des Stellantriebs 1 in der Orientierung gemäß Fig. 1.

Oft ist es erforderlich, den Stellantrieb 1 in einer anderen Orientierung aufzustellen, beispielsweise um 90°, 180° oder 270° gedreht.

Bei diesen Aufstellungen wäre die Anzeigemaske 6 nur schlecht ablesbar, da die Anzeigeeinheit 3 fest an dem Stellantrieb 1 ausgebildet ist und nicht verschwenkt oder gedreht werden kann.

Die Ansteuerungseinheit 5 ist so eingerichtet, dass die Anzeigemaske 6 an der Anzeigeeinheit 3 in 90°-Schritten gedreht werden kann.

Bei weiteren Ausführungsbeispielen sind andere Winkelschritte eingerichtet, beispielsweise weniger als 45°, 45°, 60°, 120°, 180°, mehr als 180° oder ein anderer Winkelwert.

Zwischen den unterschiedlichen Orientierungen, in denen die Anzeigemaske 6 in Fig. 2 dargestellt werden kann, kann durch Drehen des Bedienelements 2 gewechselt werden.

Es ergibt sich somit nach einer Drehung der Anzeigemaske 6 um 90° die Anzeigemaske 7 gemäß Fig. 3.

Diese Anzeigemaske 7 enthält dieselben Teilbereiche 17, 18, 20, 21, 22, 23, 24 und denselben Informationsinhalt wie die Anzeigemaske 6, jedoch ist die Darstellung daran angepasst, dass die Anzeigeeinheit 3 nun hochkant steht.

Der Stellantrieb 1 kann im manuellen Betrieb wie folgt verfahren werden.

Zunächst wählt der Benutzer - beispielsweise in der Anzeigemaske 6 gemäß Fig. 2 - den Teilbereich 17 an, wenn das Ventil geöffnet werden soll, oder den Teilbereich 18, wenn das Ventil geschlossen werden soll. Hierzu dreht der Benutzer das Bedienelement 2 um dessen Achse 19.

Anschließend aktiviert der Benutzer den angewählten Teilbereich 17, 18 durch Drücken des Bedienelements 2.

Nach Aktivierung des Teilbereichs 17, 18 verfährt der Stellantrieb in die jeweilige Richtung, bis ein neues Kommando eingegeben wird oder eine Endlage erreicht ist.

Während des Verfahrens zeigt die Anzeigeeinheit 3 die Verstellbewegung an, indem das Endlagensymbol 13, 14 blinkt, auf dessen Endlage sich das Ventil zu bewegt.

Ist die Endlage erreicht, wird das zugehörige Endlagensymbol 13, 14 verändert. Im Beispiel wird der Teilbereich 17 des Endlagensymbols 13 invertiert.

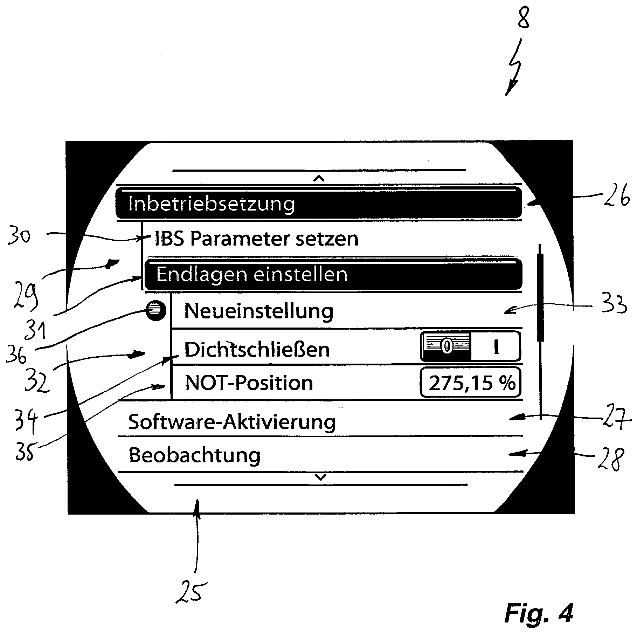

Fig. 4 zeigt eine weitere Anzeigemaske 8, die mit der Ansteuerungseinheit 5 an der Anzeigeeinheit 3 darstellbar ist.

Die Anzeigemaske 8 ergibt sich, wenn in der Anzeigemaske 6, 7 der Teilbereich 23 angewählt und aktiviert wird.

Die Anzeigemaske 8 enthält eine Listendarstellung 25 mit Listeneinträgen 26, 27, 28 sowie weiteren Listeeinträgen, die durch Scrollen sichtbar gemacht werden können.

Zwischen den Listeneinträgen 26, 27, 28 und den weiteren Listeneinträgen kann durch Drehen des Bedienelements 2 um dessen Achse 19 gewechselt werden.

Durch Drücken des Bedienelements 2 wird der jeweilige Listeneintrag 26, 27, 28 aktiviert.

Wird der Listeneintrag 26 aktiviert, öffnet sich eine weitere Listendarstellung 29 mit Listeneinträgen 30, 31.

Zwischen den Listeneinträgen 30, 31 kann nun durch Drehen des Bedienelements 2 um dessen Achse 19 gewechselt werden.

Durch Anwahl und Aktivierung des Listeneintrags 31 öffnet sich eine weitere Listendarstellung 32 mit weiteren Listeneinträgen 33, 34, 35.

Ein Anwahlsymbol 36 markiert den jeweils angewählten Listeneintrag.

Durch Anwahl und Aktivierung des Listeneintrags 33 gelangt der Benutzer in ein Menü, in welchem die grundsätzliche Endlageneinstellung erfolgt. Hierdurch ändert sich die Darstellung der Endlagensymbole 13, 14 automatisch in der beschriebenen Weise, je nachdem, ob eine drehmomentbezogene oder eine positionsbezogene Endlagenabschaltung definiert ist.

Bei weiteren Ausführungsbeispielen ist ein nicht-elektrischer, beispielsweise ein pneumatischer oder hydraulischer oder mechanischer, Stellantrieb mit den hier beschriebenen Merkmalen ausgebildet.

Bei einem Stellantrieb 1 mit wenigstens einem Bedienelement 2 und einer mit dem Bedienelement 2 ansteuerbaren Anzeigeeinheit 3 wird vorgeschlagen, die Anzeigeeinheit 3 als farbfähiges, aktives Display auszubilden.

## Patentansprüche

1. Elektrischer Stellantrieb (1) mit wenigstens einem Bedienelement (2) und einer Anzeigeeinheit (3), welche zur Anzeige von Bedien- und Statusrückmeldungen eingerichtet ist, wobei der Stellantrieb (1) einen Motor hat, mit welchem eine Abtriebswelle antreibbar ist, wobei an die Abtriebswelle ein Ventil anschließbar ist, wobei eine Stellposition (9) der Anstriebswelle des Stellantriebs (1) und/oder des angeschlossenen Ventils an der Anzeigeeinheit (3) grafisch darstellbar ist,
**dadurch gekennzeichnet, dass** die Anzeigeeinheit (3) als Display mit einer aktiven, farbfähigen Matrix (4) ausgebildet ist, dass eine Ansteuerungseinheit (5) zur Darstellung wenigstens einer Anzeigemaske (6, 7, 8) in wenigstens zwei Orientierungen an der Anzeigeeinheit (3) eingerichtet ist und/oder dass eine Orientierung einer Darstellung einer Anzeigemaske (6, 7, 8) an der Anzeigeeinheit (3) mit dem wenigstens einen Bedienelement (2) veränderbar ist.

2. Stellantrieb (1) nach Anspruch 1, **dadurch gekennzeichnet dass** das Display als TFT-Display ausgebildet ist.

3. Stellantrieb (1) nach einem der Ansprüche 1 oder 2, **dadurch gekennzeichnet, dass** eine Ansteuerungseinheit (5) an die Anzeigeeinheit (3) angeschlossen ist, mit welcher wenigstens zwei voneinander verschiedene Anzeigemasken (6, 7, 8) an der Anzeigeeinheit (3) darstellbar sind.

4. Stellantrieb (1) nach einem der Ansprüche 1 bis 3, **dadurch gekennzeichnet, dass** wenigstens eine Endlage eines von dem Stellantrieb (1) bereitgestellten Stellwegs (11) anzeigbar ist.

5. Stellantrieb (1) nach einem der Ansprüche 1 bis 4, **dadurch gekennzeichnet, dass** die Ansteuerungseinheit (5) zur Anzeige einer Endlage mittels eines Endlagesymbols (13, 14) in Abhängigkeit davon, ob an der Endlage eine drehmomentbezogene oder eine positionsbezogene Endlagenabschaltung definiert ist, eingerichtet ist und/oder sich das Endlagensymbol (13, 14) für eine drehmomentbezogene Endlagenabschaltung von dem Endlagensymbol (13, 14) für eine positionsbezogene Endlagenabschaltung zumindest bereichsweise in Formgebung und in Farbgebung unterscheidet.

6. Stellantrieb (1) nach einem der Ansprüche 1 bis 5, **dadurch gekennzeichnet, dass** die Ansteuerungseinheit (5) zum Empfang eines Bestätigungssignals, welches ein Erreichen einer Endlage signalisiert, eingerichtet ist.

7. Stellantrieb (1) nach einem der Ansprüche 1 bis 6, **dadurch gekennzeichnet, dass** die Ansteuerungseinheit (5) zur Veränderung eines angezeigten Endlagensymbols (13, 14) in Abhängigkeit von dem oder einem Bestätigungssignal eingerichtet ist.

8. Stellantrieb (1) nach einem der Ansprüche 1 bis 7, **dadurch gekennzeichnet, dass** das Bedienelement (2) um eine Achse (19) dreh- und/oder schwenkbar ausgebildet ist und/oder dass das Bedienelement (2) anschlagfrei drehbar ausgebildet ist.

9. Stellantrieb (1) nach einem der Ansprüche 1 bis 8, **dadurch gekennzeichnet, dass** das Bedienelement (2) verschiebbar, vorzugsweise entlang der oder einer Achse (19) verschiebbar, ausgebildet ist.

10. Stellantrieb (1) nach einem der Ansprüche 1 bis 9, **dadurch gekennzeichnet, dass** eine an der Anzeigeeinheit (3) darstellbare Anzeigemaske (6, 7, 8) in wenigstens zwei Teilbereiche (17, 18, 20, 21, 22, 23, 24) unterteilt ist, die mit dem wenigstens einen Bedienelement (2) einzeln anwählbar sind.

11. Stellantrieb (1) nach einem der Ansprüche 1 bis 10, **dadurch gekennzeichnet, dass** die Ansteuerungseinheit (5) zur Darstellung wenigstens einer Anzeigemaske (6, 7, 8) in vier oder mehr als vier Orientierungen an der Anzeigeeinheit (3) eingerichtet ist.

12. Stellantrieb (1) nach einem der Ansprüche 1 bis 11, **dadurch gekennzeichnet, dass** der Stellantrieb (1) durch Anwahl und Aktivierung wenigstens eines Teilbereichs (17, 18, 20, 21, 22, 23, 24) der Anzeigemaske (6, 7, 8), vorzugsweise mittels des wenigstens einen Bedienelements (2), verfahrbar ist und/oder dass der Stellantrieb (1) durch Anwahl und Aktivierung wenigstens eines Teilbereichs (17, 18, 20, 21, 22, 23, 24) der Anzeigemaske (6, 7, 8) gegen eine weitere Bedienung sperrbar ist.

13. Verfahren zum Betreiben eines Stellantriebs (1) nach einem der Ansprüche 1-12, wobei ein mit dem Stellantrieb (1) erreichbarer Stellweg (11) in einer Anzeigemaske (6, 7, 8) an einer als Display mit einer aktiven, farbfähigen Matrix (4) ausgebildeten Anzeigeeinheit (3) dargestellt wird, wobei die Anzeigemaske (6, 7, 8) in mehrere anwählbare Teilbereiche unterteilt (17, 18, 20, 21, 22, 23, 24) ist, wobei wenigstens zwei der Teilbereiche (17, 18, 20, 21, 22, 23, 24) einer Verstellbewegung des Stellantriebs (1) zugeordnet sind, wobei eine momentane Stellposition des Stellantriebs (1) an dem dargestellten Stellweg (11) markiert wird, wobei ein einer Verstellbewegung des Stellantriebs (1) zugeordneter Teilbereich (17, 18, 20, 21, 22, 23, 24) der Anzeigemaske (6, 7, 8) mit einem Bedienelement (2) angewählt wird und wobei der Teilbereich (17, 18, 20, 21, 22, 23, 24) aktiviert wird und dass der Stellantrieb (1) nach dem Aktivieren die Verstellbewegung ausführt.

14. Verfahren nach Anspruch 13, **dadurch gekennzeichnet, dass** zum Anwählen des Teilbereichs (17, 18, 20, 21, 22, 23, 24) das Bedienelement (2) um eine Achse (19) gedreht wird und/oder dass zum Aktivieren des Teilbereichs (17, 18, 20, 21, 22, 23, 24) das Bedienelement (2), vorzugsweise entlang der oder einer Achse (19), verschoben wird.

15. Verfahren nach einem der Ansprüche 13 oder 14, **dadurch gekennzeichnet, dass** ein Endlagensymbol (13, 14) angezeigt oder verändert wird, wenn eine Endlage der Verstellbewegung erreicht ist, und/oder dass das oder ein Endlagensymbol (13, 14) in Abhängigkeit davon, ob die zugehörige Endlage drehmomentbezogen oder positionsbezogen definiert ist, angezeigt wird.

16. Verfahren nach einem der Ansprüche 13 bis 15, **dadurch gekennzeichnet, dass** die Ausführung der Verstellbewegung an der Anzeigeeinheit (3) angezeigt wird, insbesondere durch ein blinkendes Symbol.

## Claims

1. Electrical actuating drive (1) comprising at least one operator control element (2) and one display unit (3) which is designed for displaying operator control and status feedback, wherein the actuating drive (1) has a motor with which an output shaft can be driven, wherein a valve can be connected to the output shaft, wherein an actuating position (9) of the output shaft of the actuating drive (1) and/or of the connected valve can be graphically represented on the display unit (3), **characterized in that** the display unit (3) is in the form of a display with an active matrix (4) having colour capability, **in that** a triggering unit (5) is designed for representing at least one display mask (6, 7, 8) in at least two orientations on the display unit (3), and/or in that an orientation of a representation of a display mask (6, 7, 8) on the display unit (3) can be changed using the at least one operator control element (2).

2. Actuating drive (1) according to Claim 1, **characterized in that** the display is in the form of a TFT display.

3. Actuating drive (1) according to either of Claims 1 and 2, **characterized in that** a triggering unit (5) is connected to the display unit (3), using which triggering unit at least two display masks (6, 7, 8) which are different from one another can be represented on the display unit (3).

4. Actuating drive (1) according to one of Claims 1 to 3, **characterized in that** at least one end position of an actuating path (11) which is provided by the actuating drive (1) can be displayed.

5. Actuating drive (1) according to one of Claims 1 to 4, **characterized in that** the triggering unit (5) is designed for displaying an end position by means of an end position symbol (13, 14) depending on whether torque-related or position-related end position switch off is defined at the end position, and/or the end position symbol (13, 14) for torque-related end position switch off differs from the end position symbol (13, 14) for position-related end position switch off in respect of shape and in respect of colour at least in regions.

6. Actuating drive (1) according to one of Claims 1 to 5, **characterized in that** the triggering unit (5) is designed for receiving a confirmation signal which indicates that an end position has been reached.

7. Actuating drive (1) according to one of Claims 1 to 6, **characterized in that** the triggering unit (5) is designed for changing a displayed end position symbol (13, 14) depending on the or a confirmation signal.

8. Actuating drive (1) according to one of Claims 1 to 7, **characterized in that** the operator control element (2) is designed such that it can rotate and/or pivot about an axis (19), and/or **in that** the operator control element (2) is designed such that it can rotate without stops.

9. Actuating drive (1) according to one of Claims 1 to 8, **characterized in that** the operator control element (2) is designed such that it can be displaced, preferably along the or an axis (19).

10. Actuating drive (1) according to one of Claims 1 to 9, **characterized in that** a display mask (6, 7, 8) which can be represented on the display unit (3) is subdivided into at least two subregions (17, 18, 20, 21, 22, 23, 24) which can be individually selected using the at least one operator control element (2).

11. Actuating drive (1) according to one of Claims 1 to 10, **characterized in that** the triggering unit (5) is designed for representing at least one display mask (6, 7, 8) in four or more than four orientations on the display unit (3).

12. Actuating drive (1) according to one of Claims 1 to 11, **characterized in that** the actuating drive (1) can be moved by selecting and activating at least one subregion (17, 18, 20, 21, 22, 23, 24) of the display mask (6, 7, 8), preferably by means of the at least one operator control element (2), and/or **in that** the actuating drive (1) can be blocked against further operator control by selecting and activating at least one subregion (17, 18, 20, 21, 22, 23, 24) of the display mask (6, 7, 8).

13. Method for operating an actuating drive (1) according to one of Claims 1-12, wherein an actuating path (11) which can be achieved using the actuating drive (1) is represented in a display mask (6, 7, 8) on a display unit (3) which is in the form of a display with an active matrix (4) having colour capability, wherein the display mask (6, 7, 8) is subdivided (17, 18, 20, 21, 22, 23, 24) into a plurality of selectable subregions, wherein at least two of the subregions (17, 18, 20, 21, 22, 23, 24) are associated with an adjusting movement of the actuating drive (1), wherein a momentary actuating position of the actuating drive (1) is marked on the represented actuating path (11), wherein a subregion (17, 18, 20, 21, 22, 23, 24) of the display mask (6, 7, 8), which subregion is associated with an adjusting movement of the actuating drive (1), is selected using an operator control element (2), and wherein the subregion (17, 18, 20, 21, 22, 23, 24) is activated, and in that the actuating drive (1) executes the adjusting movement after the activation.

14. Method according to Claim 13, **characterized in that** the operator control element (2) is rotated about an axis (19) for the purpose of selecting the subregion (17, 18, 20, 21, 22, 23, 24), and/or **in that** the operator control element (2) is displaced, preferably along the or an axis (19), for the purpose of activating the subregion (17, 18, 20, 21, 22, 23, 24).

15. Method according to either of Claims 13 and 14, **characterized in that** an end position symbol (13, 14) is displayed or changed when an end position of the adjusting movement is reached, and/or **in that** the or an end position symbol (13, 14) is displayed depending on whether the associated end position is defined in a torque-related manner or a position-related manner.

16. Method according to one of Claims 13 to 15, **characterized in that** the execution of the adjusting movement is displayed on the display unit (3), in particular by a flashing symbol.

## Revendications

1. Mécanisme de commande électrique (1) avec au moins un élément de commande (2) et une unité d'affichage (3), qui est configurée en vue de l'affichage de messages de commande et de statut, dans lequel le mécanisme de commande (1) comporte un moteur, avec lequel un arbre de sortie peut être entraîné, dans lequel une soupape peut être raccordée à l'arbre de sortie, dans lequel une position de réglage (9) de l'arbre d'entraînement du mécanisme de commande (1) et/ou de la soupape raccordée peut être représentée sous forme graphique sur l'unité d'affichage (3), **caractérisé en ce que** l'unité d'affichage (3) est réalisée sous forme d'afficheur avec une matrice en couleurs active (4), **en ce qu'**une unité de commande (5) est configurée en vue de la représentation d'au moins un masque d'affichage (6, 7, 8) dans au moins deux orientations sur l'unité d'affichage (3) et/ou **en ce qu'**une orientation d'une représentation d'un masque d'affichage (6, 7, 8) sur l'unité d'affichage (3) peut être changée avec ledit au moins un élément de commande (2).

2. Mécanisme de commande (1) selon la revendication 1, **caractérisé en ce que** l'afficheur est constitué par un afficheur TFT.

3. Mécanisme de commande (1) selon une des revendications 1 ou 2, **caractérisé en ce qu'**une unité de commande (5) est reliée à l'unité d'affichage (3), avec laquelle au moins deux masques d'affichage (6, 7, 8) différents l'un de l'autre peuvent être représentés sur l'unité d'affichage (3).

4. Mécanisme de commande (1) selon l'une quelconque des revendications 1 à 3, **caractérisé en ce qu'**au moins une position finale d'une course de commande (11) préparée par le mécanisme de commande (1) peut être affichée.

5. Mécanisme de commande (1) selon l'une quelconque des revendications 1 à 4, **caractérisé en ce que** l'unité de commande (5) est configurée en vue de l'affichage d'une position finale au moyen d'un symbole de position finale (13, 14) en fonction de ce qu'une désactivation de position finale liée au couple ou liée à la position est définie à la position finale et/ou que le symbole de position finale (13, 14) pour une désactivation de position finale liée au couple se distingue, au moins localement au niveau de la forme et de la coloration, du symbole de position finale (13, 14) pour une désactivation de position finale liée à la position.

6. Mécanisme de commande (1) selon l'une quelconque des revendications 1 à 5, **caractérisé en ce que** l'unité de commande (5) est configurée en vue de recevoir un signal de confirmation, qui signale qu'une position finale est atteinte.

7. Mécanisme de commande (1) selon l'une quelconque des revendications 1 à 6, **caractérisé en ce que** l'unité de commande (5) est configurée en vue de changer un symbole de position finale affiché (13, 14) en fonction du ou d'un signal de confirmation.

8. Mécanisme de commande (1) selon l'une quelconque des revendications 1 à 7, **caractérisé en ce que** l'élément de commande (2) peut tourner et/ou pivoter autour d'un axe (19) et/ou **en ce que** l'élément de commande (2) peut tourner sans butée.

9. Mécanisme de commande (1) selon l'une quelconque des revendications 1 à 8, **caractérisé en ce que** l'élément de commande (2) est déplaçable, de préférence est déplaçable le long du ou d'un axe (19).

10. Mécanisme de commande (1) selon l'une quelconque des revendications 1 à 9, **caractérisé en ce qu'**un masque d'affichage (6, 7, 8) pouvant être représenté sur l'unité d'affichage (3) est divisé en au moins deux régions partielles (17, 18, 20, 21, 22, 23, 24), qui peuvent être sélectionnées individuellement avec ledit au moins un élément de commande (2).

11. Mécanisme de commande (1) selon l'une quelconque des revendications 1 à 10, **caractérisé en ce que** l'unité de commande (5) est configurée en vue de la représentation d'au moins un masque d'affichage (6, 7, 8) dans quatre ou plus de quatre orientations sur l'unité d'affichage (3).

12. Mécanisme de commande (1) selon l'une quelconque des revendications 1 à 11, **caractérisé en ce que** le mécanisme de commande (1) peut être déplacé par la sélection et l'activation d'au moins une région partielle (17, 18, 20, 21, 22, 23, 24) du masque d'affichage (6, 7, 8), de préférence au moyen dudit au moins un élément de commande (2), et/ou **en ce que** le mécanisme de commande (1) peut être bloqué contre une nouvelle commande par la sélection et l'activation d'au moins une région partielle (17, 18, 20, 21, 22, 23, 24) du masque d'affichage (6, 7, 8).

13. Procédé pour faire fonctionner un mécanisme de commande (1) selon l'une quelconque des revendications 1 à 12, dans lequel on représente une course de réglage (11) réalisable avec le mécanisme de commande (1) dans un masque d'affichage (6, 7, 8) sur une unité d'affichage (3) constituée par un afficheur avec une matrice en couleurs active (4), dans lequel le masque d'affichage (6, 7, 8) est divisé en plusieurs régions partielles sélectionnables (17, 18, 20, 21, 22, 23, 24), dans lequel au moins deux des régions partielles (17, 18, 20, 21, 22, 23, 24) sont associées à un mouvement de déplacement du mécanisme de commande (1), dans lequel on marque une position de réglage instantanée du mécanisme de commande (1) sur la course de réglage représentée (11), dans lequel on sélectionne avec un élément de commande (2) une région partielle (17, 18, 20, 21, 22, 23, 24) du masque d'affichage (6, 7, 8) associée à un mouvement de déplacement du mécanisme de commande (1) et dans lequel on active la région partielle (17, 18, 20, 21, 22, 23, 24) et en ce que le mécanisme de commande (1) exécute après l'activation le mouvement de déplacement.

14. Procédé selon la revendication 13, **caractérisé en ce que** l'on fait tourner l'élément de commande (2) autour d'un axe (19) pour la sélection de la région partielle (17, 18, 20, 21, 22, 23, 24) et/ou **en ce que** l'on déplace l'élément de commande (2), de préférence le long du ou de l'axe (19), pour l'activation de la région partielle (17, 18, 20, 21, 22, 23, 24).

15. Procédé selon la revendication 13 ou 14, **caractérisé en ce que** le symbole de position finale (13, 14) s'affiche ou est modifié lorsqu'une position finale du mouvement de déplacement est atteinte et/ou **en ce que** le ou un symbole de position finale (13, 14) s'affiche en fonction de ce que la position finale correspondante est définie comme liée au couple ou comme liée à la position.

16. Procédé selon l'une des revendications 13 à 15, **caractérisé en ce que** la réalisation du mouvement de déplacement s'affiche sur l'unité d'affichage (3), en particulier à l'aide d'un symbole clignotant.
